# EUROPÄISCHE PATENTSCHRIFT

(11) **EP 2 933 577 B1**
(45) Veröffentlichungstag und Bekanntmachung des Hinweises auf die Patenterteilung: **06.12.2017**
(21) Anmeldenummer: 14290108.1
(22) Anmeldetag: 14.04.2014
(51) Int. Cl.: F24H 3/04, B60H 1/22, H05B 3/06, H05B 3/50

(54) **Elektrische Heizvorrichtung**
Electric heating device
Dispositif de chauffage électrique

(43) Veröffentlichungstag der Anmeldung: 21.10.2015
(73) Patentinhaber: Mahle Behr France Rouffach S.A.S., 68250 Rouffach (FR)
(72) Erfinder: Gries, Jean-Philippe, FR - 68000 Colmar (FR)
(74) Vertreter: Grauel, Andreas

(56) Entgegenhaltungen:
- EP-A1- 1 522 440
- EP-A1- 1 626 231
- WO-A1-2012/019854

## Beschreibung

### Technisches Gebiet

Die Erfindung betrifft eine elektrische Heizvorrichtung für ein Kraftfahrzeug, mit zumindest einem Heizelement und mit zumindest einer Leiterplatine, wobei die Leiterplatine zumindest einen Kontaktierungsbereich zur Herstellung einer elektrischen Verbindung zwischen dem Heizelement und einer Energiequelle aufweist, wobei das Heizelement eine Mehrzahl von PTC-Heizelementen aufweist, welche durch ein Kontaktelement miteinander elektrisch leitend verbunden sind.

### Stand der Technik

Elektrische Heizvorrichtungen weisen regelmäßig zumindest ein Heizelement auf, welches durch das Anlegen einer elektrischen Spannung aufgeheizt werden kann. Die Wärme kann dann durch Finnen oder andere thermisch leitfähige Elemente zu einer Wärmesenke geleitet werden. Die Wärmesenke kann somit durch das Heizelement aufgeheizt werden. Die elektrischen Heizvorrichtungen weisen weiterhin regelmäßig eine Regelungsvorrichtung auf, durch welche die elektrische Spannung geregelt werden kann.

Elektrische Heizvorrichtungen, die im Stand der Technik bekannt sind, weisen oft eine Verbindungsanordnung auf, welche die Heizelemente mit der Regelungsvorrichtung und/oder der Spannungsquelle verbindet. Die Verbindungsanordnung kann dabei
beispielsweise durch einen männlichen Verbindungsteil und einen weiblichen Verbindungsteil gebildet sein, welche zum Erzeugen einer Verbindung ineinander gesteckt werden können. Beim Verbinden der Verbindungsteile werden mechanische Störgrößen erzeugt, welche auf die elektrische Heizvorrichtung einwirken. Dies geschieht insbesondere während die Verbindungen erzeugt werden beziehungsweise, wenn die Verbindungen gelöst werden. Dies kann zu einer Beschädigung der elektrischen Heizvorrichtung führen. Insbesondere dann, wenn die einzelnen Heizelemente über einen gemeinsamen Leiterstrang mit der Regelungsvorrichtung und/oder der Spannungsquelle verbunden sind, führt das Montieren oder das Lösen eines einzelnen Heizelementes zwangsweise zu einer mechanischen Belastung der anderen Heizelemente, wodurch Beschädigungen verursacht werden können.

Weiterhin kann die Verbindungsanordnung Korrosion und Feuchtigkeit ausgesetzt sein. Dies liegt darin begründet, dass es mit sehr hohem Aufwand verbunden ist, eine ausreichende Abdichtung der Verbindungsanordnung zu erreichen.

Das Eindringen von Feuchtigkeit kann dabei zu Korrosion führen und somit zu einer Fehlfunktion oder einem Ausfall der elektrischen Heizvorrichtung. Insbesondere hinsichtlich des Einsatzes einer elektrischen Heizvorrichtung in Kraftfahrzeugen ist darüber hinaus mit Erschütterungen und mechanischen Störgrößen zu rechnen, die sich ebenfalls negativ auf die Dauerhaltbarkeit der Verbindungsanordnung auswirken. Die elektrischen Heizvorrichtungen werden dabei gewöhnlich dazu verwendet, zusätzlich zum Verbrennungsmotor eine elektrische Heizleistung zur Verfügung zu stellen. In elektrisch angetriebenen Kraftfahrzeugen können die elektrischen Heizvorrichtungen auch die gesamte benötigte Heizleistung erzeugen.

Eine elektrische Heizvorrichtung nach dem Oberbegriff des Anspruchs 1 ist aus der Patentschrift WO2012/019854 bekannt.

### Darstellung der Erfindung, Aufgabe, Lösung, Vorteile

Daher ist es die Aufgabe der vorliegenden Erfindung eine elektrische Heizvorrichtung bereitzustellen, welche eine verbesserte Verbindung zwischen den Heizelementen und der Leiterplatine ermöglicht.

Die Aufgabe hinsichtlich der elektrischen Heizvorrichtung wird durch eine elektrische Heizvorrichtung mit den Merkmalen des Anspruchs 1 gelöst.

Ein Ausführungsbeispiel der Erfindung betrifft eine elektrische Heizvorrichtung für ein Kraftfahrzeug, mit zumindest einem Heizelement und mit zumindest einer Leiterplatine, wobei die Leiterplatine zumindest einen Kontaktierungsbereich zur Herstellung einer elektrischen Verbindung zwischen dem Heizelement und einer Energiequelle aufweist, wobei das Heizelement eine Mehrzahl von PTC-Heizelementen aufweist, welche durch ein Kontaktelement miteinander elektrisch leitend verbunden sind, wobei das Kontaktelement des Heizelementes beabstandet zu dem Kontaktierungsbereich angeordnet ist, wobei eine elektrisch leitfähige Verbindung zwischen dem Kontaktelement und dem Kontaktierungsbereich über eine Mehrzahl von Einzelleitern erzeugt ist.

Die Einzelleiter ermöglichen es die Heizelemente beabstandet zu der Leiterplatine anzuordnen. Dadurch kann das Heizelement von der Leiterplatine mechanisch entkoppelt werden. Je nach Gestaltung der Einzelleiter ist somit eine gewisse Beweglichkeit zwischen dem Heizelement und der Leiterplatine gewährleistet, wodurch erreicht wird, dass durch eine Krafteinwirkung auf das Heizelement keine oder nur eine geringe Krafteinwirkung auf die Leiterplatine erzeugt wird. Dies führt zu einer Entlastung der Leiterplatine und der elektrischen Verbindungen.

Auch ist es vorteilhaft, wenn die Einzelleiter durch Drähte gebildet sind, welche zueinander beabstandet das Kontaktelement mit dem Kontaktierungsbereich elektrisch leitend verbinden.

Drähte sind besonders vorteilhaft, da sie eine große Relativbewegung zwischen dem Heizelement und der Leiterplatine erlauben. Außerdem sind Drähte in vielfältigen Ausformungen erhältlich und kostengünstig zu beziehen. Weiterhin ist die Verbindung zweier Komponenten mit Drähten aus vielfältigen Anwendungen bekannt. Daher ist es möglich auf einfache Weise eine dauerhaft haltbare Verbindung zu erzeugen.

Darüber hinaus kann es vorteilhaft sein, wenn die Einzelleiter durch bandartige Elemente gebildet sind, welche zueinander beabstandet das Kontaktelement mit dem Kontaktierungsbereich elektrisch leitend verbinden.

Bandartige Elemente, wie beispielsweise Flachkabel, sind vorteilhaft, da sie einen größeren Leitungsquerschnitt aufweisen als herkömmliche Rundkabel oder Drähte. Dadurch kann eine größere Leistung übertragen werden. Bandartige Elemente haben weiterhin den Vorteil, dass eine Relativbewegung quer zu den Breitseiten der bandartigen Elemente einfacher ist als eine Relativbewegung quer zu den Schmalseiten der bandartigen Elemente. Durch die Verwendung von bandartigen Elementen kann somit eine Richtungsabhängigkeit erzeugt werden, wobei eine Relativbewegung der Heizelemente zur Leiterplatine in eine durch die Ausrichtung der bandartigen Elemente festgelegte Richtung mit geringerem Widerstand erfolgen kann als in die jeweils andere Richtung.

Zusätzlich bieten Leitungselemente, welche bandartig ausgeformt sind, den Vorteil, dass sie eine bessere Wärmeabfuhr ermöglichen. Die bandartigen Elemente weisen eine größere Oberfläche auf als vergleichbare Rundleiter. Durch die größere Oberfläche ist eine verbesserte Dissipation der an den Heizelementen und/oder der Leistungselektronik entstehenden Wärme ermöglicht.

Auch kann es zweckmäßig sein, wenn die Einzelleiter aus Aluminium gebildet sind. Aluminium bietet sehr gute elektrische Leiteigenschaften. Außerdem ist Aluminium besonders vorteilhaft, da die Kontaktierungsbereiche ebenfalls oft aus Aluminium gebildet sind oder mit einer Aluminiumbeschichtung versehen sind. Auch sind die Kontaktelemente, welche zur elektrischen Kontaktierung der einzelnen PTC-Heizelemente verwendet werden, regelmäßig aus Aluminium gebildet. Dies erleichtert insbesondere die Anbindung der Einzelleiter bei der Verwendung von Lötverfahren und/oder Klebeverfahren. Alternativ können die Kontaktierungsbereiche auch mit Gold beschichtet sein, beispielsweise durch das stromlose Nickel / Sudgold Verfahren (englisch: electroless nickel immersion gold ENIG).

In einer alternativen Ausgestaltung können die Einzelleiter insbesondere auch aus anderen Materialien mit einer hohen elektrischen Leitfähigkeit gebildet sein. Unter anderem kann insbesondere Kupfer als Material für die Einzelleiter verwendet werden.

Weiterhin kann es besonders vorteilhaft sein, wenn die Einzelleiter mehrschichtig angeordnet sind, wobei sowohl die nebeneinander angeordneten Einzelleiter als auch die übereinander angeordneten Einzelleiter zueinander beabstandet angeordnet sind. Durch eine Beabstandung der Einzelleiter zueinander kann ein höherer Freiheitsgrad in der Relativbewegung der Heizelemente gegenüber der Leiterplatine erreicht werden, da die Bewegung nicht unmittelbar durch eine Anlage der Einzelleiter aneinander behindert wird. Außerdem wird, abhängig von der Polarität der einzelnen Einzelleiter, ein Kurzschluss verhindert.

Ein bevorzugtes Ausführungsbeispiel ist dadurch gekennzeichnet, dass das Kontaktelement und der Kontaktierungsbereich zueinander beabstandet angeordnet sind, wobei der Abstand zwischen dem Kontaktelement und dem Kontaktierungsbereich durch die Einzelleiter überwunden ist. Eine Beabstandung der Heizelemente gegenüber der Leiterplatine ist insbesondere vorteilhaft, um eine mechanische Entkopplung der Heizelemente von der Leiterplatine zu erreichen. Dies ist vorteilhaft, um eine höhere Dauerhaltbarkeit der elektrischen Heizvorrichtung zu erreichen.

Auch ist es zu bevorzugen, wenn die Einzelleiter mit dem Kontaktierungsbereich und/oder dem Kontaktelement verlötet und/oder verklebt und/oder verklemmt und/oder verschraubt sind. Als Lötverfahren kann besonders bevorzugt ein Ultraschall-Lötverfahren zum Einsatz kommen.

In einer besonders günstigen Ausgestaltung der Erfindung ist es außerdem vorgesehen, dass Einzelleiter unterschiedlicher Materialdicke zur Erzeugung der elektrisch leitenden Verbindung verwendet sind. Durch die Verwendung von Einzelleitern unterschiedlicher Materialdicke, kann die Relativbewegung zwischen den Heizelementen und der Leiterplatine positiv beeinflusst werden.

In einer alternativen Ausgestaltung der Erfindung kann es vorgesehen sein, dass die einzelnen jeweils nebeneinander in einer gemeinsamen Schicht angeordneten Einzelleiter aus Einzelleitern der gleichen Materialdicke gebildet sind.

Weiterhin ist es zu bevorzugen, wenn die Einzelleiter durch Distanzelemente zueinander beabstandet sind. Durch Distanzelemente kann insbesondere verhindert werden, dass die einzelnen Einzelleiter miteinander in Anlage geraten. Dies könnte je nach der Polarität der Einzelleiter zu Kurzschlüssen führen. Auch könnte durch das in Anlage geraten der Einzelleiter untereinander eine Reibwirkung erzielt werden, welche der möglichen Relativbewegung zwischen einem Heizelement und der Leiterplatine entgegenwirkt.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: eine perspektivische Ansicht einer elektrischen Heizvorrichtung, wobei die Heizelemente jeweils über eine Mehrzahl von Kabeln mit jeweils einem Kontaktierungsbereich der Leiterplatine verbunden sind,
- Fig. 2: eine perspektivische Ansicht einer elektrischen Heizvorrichtung, wobei die Heizelemente jeweils über einen bandartigen Einzelleiter mit jeweils einem Kontaktierungsbereich der Leiterplatine verbunden sind, wobei gemäß der Erfindung jedoch mehrere bandartige Einzelleiter vorgesehen sind;
- Fig. 3: eine Aufsicht auf die Kontaktierungsbereiche einer Leiterplatine, wobei die Heizelemente jeweils mit einer Mehrzahl von Einzelleitern, welche durch Drähte gebildet sind, mit jeweils einem Kontaktierungsbereich verbunden sind,
- Fig. 4: eine Aufsicht gemäß der Fig. 3, wobei die Heizelemente jeweils mit einer Mehrzahl von bandartigen Einzelleitern mit den Kontaktierungsbereichen verbunden sind, und
- Fig. 5: eine Seitenansicht einer Verbindung zwischen einem Heizelement und einem Kontaktierungsbereich, wobei die bandartigen Einzelleiter in mehreren Schichten übereinander angeordnet sind.

### Bevorzugte Ausführung der Erfindung

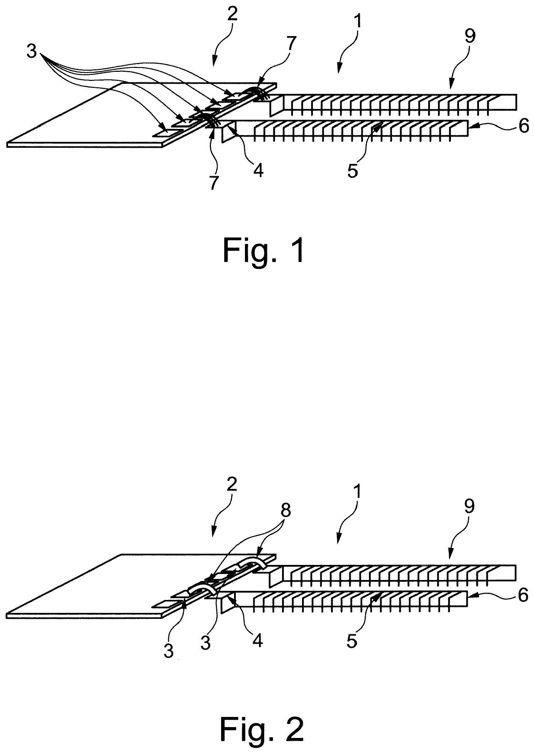

Die Fig. 1 zeigt eine perspektivische Ansicht einer elektrischen Heizvorrichtung 1. Die elektrische Heizvorrichtung besteht im Wesentlichen aus einer Leiterplatine 2, an welche eine Mehrzahl von Heizelementen 9 angeschlossen ist. Im Beispiel der Fig. 1 sind an die Leiterplatine 2 zwei Heizelemente 9 angebunden.

Die Heizelemente 9 bestehen im Wesentlichen aus einer Mehrzahl von PTC-Heizelementen 6, welche entlang eines Rahmens oder einer Führungseinrichtung angeordnet sind. Weiterhin weisen die Heizelemente 9 eine Mehrzahl von Finnen 5 auf, welche der Wärmeabstrahlung beziehungsweise der Wärmeübertragung dienen. Die PTC-Heizelemente 6 sind über ein Kontaktelement 4 oder mehrere Kontaktelemente 4 elektrisch kontaktierbar. Diese Kontaktelemente 4 können beispielsweise durch ein dünnes blechartiges Element gebildet sein, an welche die PTC-Heizelemente 6 elektrisch leitend angebunden sind. Ein PTC-Heizelement 6 ist dabei bevorzugt mit zwei Kontaktelementen 4 verbunden, wobei eines der Kontaktelemente 4 mit einem positiven Pol einer Spannungsquelle elektrisch leitend verbunden ist, und das andere Kontaktelement 4 mit einem negativen Pol einer Spannungsquelle elektrisch leitend verbunden ist. In alternativen Ausführungen kann es auch vorgesehen sein, dass das PTC-Heizelement nur mit einem Kontaktelement einer Polarität verbunden ist, während die elektrisch leitende Verbindung zur jeweils anderen Polarität durch alternative Leiterstrukturen realisiert ist. Die alternative Leiterstruktur kann beispielsweise durch die Finnen 5 gebildet sein.

Im Beispiel der Fig, 1 ist das Kontaktelement 4 eine winkelförmig gebogene Schiene, an welcher einseitig die Finnen 5 angebunden sind und auf der gegenüberliegenden vom Betrachter abgewandten Seite die PTC-Heizelemente 6. Weiterhin weist das Kontaktelement 4 einen winkelförmig abgebogenen Bereich auf, welcher mit dem Kontaktierungsbereich 3 der Leiterplatine 2 elektrisch leitend verbunden werden kann.

Die Leiterplatine 2 weist mehrere Kontaktierungsbereiche 3 auf. Diese sind über Leiterbahnen auf der Leiterplatine 2 mit einer nicht gezeigten Energiequelle verbunden. Die Leiterbahnen sind in Fig. 1 ebenfalls nicht gezeigt.

Die elektrisch leitende Verbindung zwischen jeweils einem Kontaktierungsbereich 3 und jeweils einem Kontaktelement 4 ist erfindungsgemäß im Ausführungsbeispiel der Fig. 1 durch eine Anordnung von einer Mehrzahl von Einzelleitern 7 erzeugt, welche jeweils mit einem der Kontaktelemente 4 und jeweils einem der Kontaktierungsbereiche 3 verbunden sind.

Im Ausführungsbeispiel der Fig. 1 sind die Einzelleiter 7 durch dünne Drähte gebildet, welche mit den Kontaktierungsbereichen 3 beziehungsweise den Kontaktelementen 4 beispielsweise verlötet, verklebt, verklemmt oder verschraubt sind. Besonders vorteilhaft ist eine Verbindung, welche durch ein Ultraschall-Lötverfahren erzeugt wird. Die Einzelleiter 7 sind zueinander beabstandet angeordnet. Jedes der Kontaktelemente 4 ist über eine Mehrzahl von Einzelleitern 7 mit jeweils einem Kontaktierungsbereich 3 verbunden.
Hierdurch wird erreicht, dass insbesondere die Kontaktelemente 4 von den Kontaktierungsbereichen 3 beziehungsweise von der Leiterplatine 2 beabstandet angeordnet werden können. Die Einzelleiter 7 können vollständig ohne Isolation ausgeführt sein oder auch außerhalb der Kontaktbereiche mit dem Kontaktelement 4 beziehungsweise dem Kontaktierungsbereich 3 eine Isolation aufweisen, um Kurzschlüsse mit umgebenen Strukturen zu vermeiden.
Die Fig. 2 zeigt eine alternative Ausführungsform einer elektrischen Heizvorrichtung 1. Der grundsätzliche Aufbau der Ausführungsform der Fig. 2 stimmt mit dem der Fig. 1 überein. Die Bezugszeichen sind dementsprechend analog verwendet. Im Unterschied zur Fig. 1 sind in der Fig. 2 die Einzelleiter 8 nun nicht durch dünne Drähte 7 gebildet, sondern durch bandförmige Leiterabschnitte, welche jeweils mit einem Kontaktierungsbereich 3 und einem Kontaktelement 4 verbunden sind.

Im Beispiel der Fig. 2 ist jeweils nur ein Einzelleiter 8 an jedem Kontaktelement 4 angeordnet. Gemäß der Erfindung sind eine Mehrzahl von Einzelleitern jeweils zwischen einem Kontaktelement und einem Kontaktierungsbereich vorgesehen. Die Einzelleiter 8, welche als bandförmige Elemente ausgebildet sind, bieten insbesondere eine höhere Stabilität und können zusätzlich zur elektrischen Leitung auch eine stabilisierende Wirkung zwischen der Leiterplatine 2 und den Heizelementen 9 entfalten.

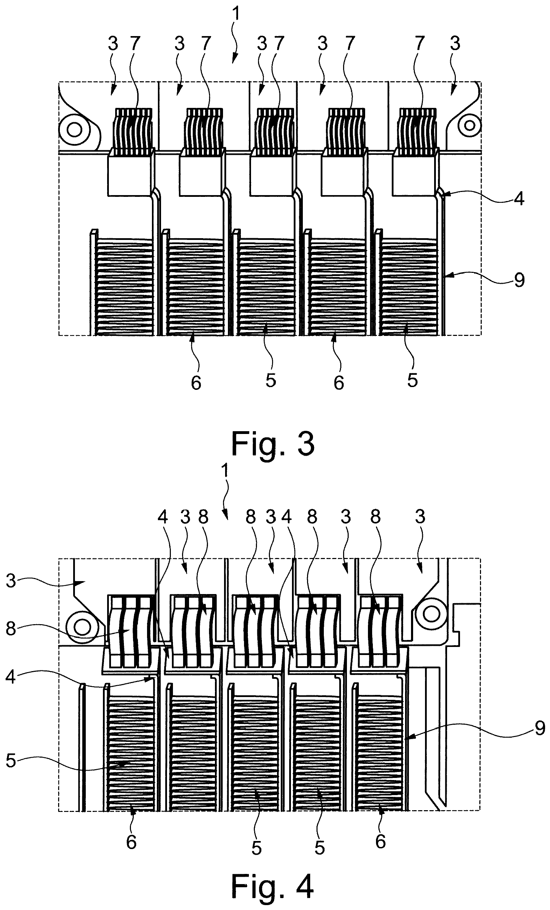

Die Fig. 3 zeigt eine Detailansicht einer Ausführungsform gemäß der Fig. 1. Nebeneinander sind fünf Heizelemente 9 angeordnet, welche jeweils eine Mehrzahl von Finnen 5 aufweisen und eine nicht gezeigte Mehrzahl von PTC-Heizelementen 6. Über die Kontaktelemente 4 werden die PTC-Heizelemente 6 mit einer elektrischen Spannung versorgt. Zwischen jedem der Kontaktelemente 4 und den obenliegenden Kontaktierungsbereichen 3 ist jeweils eine Mehrzahl von Einzelleitern 7 parallel zueinander geführt, wodurch eine elektrisch leitende Verbindung hergestellt wird. Die Einzelleiter 7 sind insbesondere drahtförmig und sind vorzugsweise durch Drahtstücke mit runden oder rechteckigen Querschnitten gebildet. Die einzelnen Einzelleiter 7 sind dabei insbesondere zueinander beabstandet angeordnet und sind bogenförmig ausgeformt.

Die Kontaktelemente 4 sind direkt benachbart zu den Kontaktierungsbereichen 3 angeordnet, stehen jeweils jedoch nicht eigenständig mit den Kontaktierungsbereichen 3 in elektrisch leitendem oder physischem Kontakt. Die elektrisch leitende Verbindung wird vollständig durch die Einzelleiter 7 erzeugt.

Die Fig. 4 zeigt eine Aufsicht auf eine elektrische Heizvorrichtung 1 gemäß dem Ausführungsbeispiel der Fig. 3. Im Unterschied zur Fig. 3 werden in Fig. 4 nun bandförmige Materialabschnitte als Einzelleiter 8 verwendet. Die Kontaktelemente 4 sind jeweils über drei parallel nebeneinander angeordnete bandförmige Einzelleiter 8 mit den einzelnen Kontaktierungsbereichen 3 verbunden. Der Aufbau der unten gezeigten Heizelemente 9 stimmt mit dem der Fig. 3 überein.

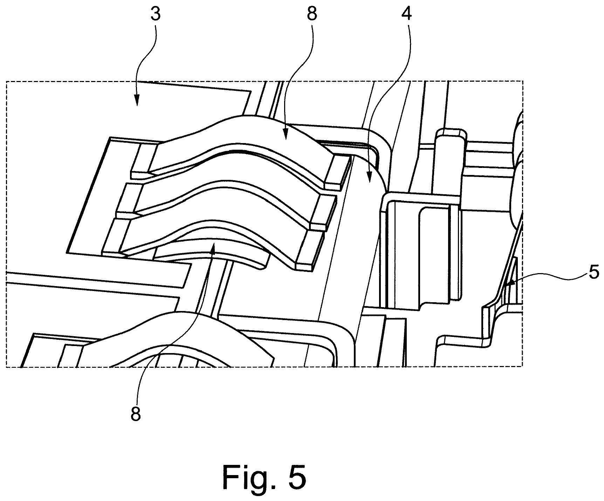

Die Fig. 5 zeigt eine perspektivische Ansicht der elektrischen Heizvorrichtung der Fig. 4. In Fig. 5 ist insbesondere zu erkennen, dass die Einzelleiter 8 in mehreren Schichten angeordnet sind. So sind kürzere Einzelleiter 8 im unteren Bereich dargestellt, welche die Kontaktierungsbereiche 3 mit den jeweiligen Kontaktelementen 4 verbinden. Darüberliegend ist eine zweite Schicht längerer Einzelleiter 8 angeordnet, welche bogenförmig ausgeformt sind und eine weitere Verbindung der Kontaktierungsbereiche 3 mit den Kontaktelementen 4 herstellen. Wie im Ausführungsbeispiel der Fig. 5 zu erkennen ist, sind die Einzelleiter mit den Kontaktierungsbereichen 3 beziehungsweise den Kontaktelementen 4 insbesondere verlötet. Die einzelnen Einzelleiter 8 sind beabstandet zueinander angeordnet. Dies trifft sowohl auf die nebeneinanderliegenden Einzelleiter 8 innerhalb einer Schicht zu als auch auf die einzelnen Schichten zueinander. Die unteren kurzen Einzelleiter 8 sind nicht in physischem Kontakt mit den oberen, bogenförmigen längeren Einzelleitern 8.

In alternativen Ausführungsformen können Distanzelemente vorgesehen sein, welche die einzelnen Einzelleiter zueinander beabstanden. Diese Distanzelemente können entweder elektrisch nicht leitend ausgeführt sein oder elektrisch leitend, sofern alle Einzelleiter jeweils nur eine Polarität aufweisen. Weiterhin können in alternativen Ausführungsformen sowohl der positive als auch der negative Pol einer Energiequelle über Einzelleiter mit dem Kontaktelement beziehungsweise mit den einzelnen Polen zugeordneten Anschlüssen am Kontaktelement verbunden sein. Auf diese Weise kann eine Anbindung der Heizelemente sowohl an den positiven Pol als auch den negativen Pol einer Energiequelle realisiert werden. In diesem Fall ist insbesondere ein Distanzelement mit nicht leitenden Eigenschaften zu verwenden, um einen Kurzschluss durch eine Relativbewegung der Einzelleiter zueinander zu vermeiden.

Weiterhin ist es in alternativen Ausführungsformen vorsehbar, dass an dem Kontaktierungsbereich der Leiterplatine sowohl auf der Oberseite als auch auf der Unterseite Einzelleiter angeordnet sind, welche ebenfalls mit der Oberseite und der Unterseite des Kontaktelementes verbunden sind.

Die Ausführungsbeispiele der Fig. 1 bis 5 sind insbesondere beispielhaft und sollen den Erfindungsgedanken verdeutlichen. Insbesondere hinsichtlich der Anzahl der gezeigten Einzelleiter, der Ausformung der Einzelleiter sowie der Materialwahl und Gestaltung der einzelnen Einzelleiter sind die Ausführungsbeispiele der Fig. 1 bis 5 nicht beschränkend.

## Patentansprüche

1. Elektrische Heizvorrichtung (1) für ein Kraftfahrzeug, mit zumindest einem Heizelement (9) und mit zumindest einer Leiterplatine (2), wobei die Leiterplatine (2) zumindest einen Kontaktierungsbereich (3) zur Herstellung einer elektrischen Verbindung zwischen dem Heizelement (9) und einer Energiequelle aufweist, wobei das Heizelement (9) eine Mehrzahl von PTC-Heizelementen (6) aufweist, welche durch ein Kontaktelement (4) miteinander elektrisch leitend verbunden sind, **dadurch gekennzeichnet, dass** das Kontaktelement (4) des Heizelementes (9) beabstandet zu dem Kontaktierungsbereich (3) angeordnet ist, wobei eine elektrisch leitfähige Verbindung zwischen dem Kontaktelement (4) und dem Kontaktierungsbereich (3) über eine Mehrzahl von Einzelleitern (7, 8) erzeugt ist, wobei die elektrisch leitende Verbindung zwischen jeweils einem Kontaktierungsbereich (3) und jeweils einem Kontaktelement (4) durch eine Anordnung von einer Mehrzahl von Einzelleitern (7) erfolgt, welche jeweils mit einem der Kontaktelemente (4) und jeweils einem der Kontaktierungsbereiche (3) verbunden sind.

2. Elektrische Heizvorrichtung (1) nach Anspruch 1, **dadurch gekennzeichnet, dass** die Einzelleiter (7) durch Drähte (7) gebildet sind, welche zueinander beabstandet das Kontaktelement (4) mit dem Kontaktierungsbereich (3) elektrisch leitend verbinden.

3. Elektrische Heizvorrichtung (1) nach Anspruch 1, **dadurch gekennzeichnet, dass** die Einzelleiter (8) durch bandartige Elemente (8) gebildet sind, welche zueinander beabstandet das Kontaktelement (4) mit dem Kontaktierungsbereich (3) elektrisch leitend verbinden.

4. Elektrische Heizvorrichtung (1) nach einem der vorhergehenden Ansprüche, **dadurch gekennzeichnet, dass** die Einzelleiter (7, 8) aus Aluminium gebildet sind.

5. Elektrische Heizvorrichtung (1) nach einem der vorhergehenden Ansprüche, **dadurch gekennzeichnet, dass** die Einzelleiter (7, 8) mehrschichtig angeordnet sind, wobei sowohl die nebeneinander angeordneten Einzelleiter (7, 8) als auch die übereinander angeordneten Einzelleiter (7, 8) zueinander beabstandet angeordnet sind,

6. Elektrische Heizvorrichtung (1) nach einem der vorhergehenden Ansprüche, **dadurch gekennzeichnet, dass** das Kontaktelement (4) und der Kontaktierungsbereich (3) zueinander beabstandet angeordnet sind, wobei der Abstand zwischen dem Kontaktelement (4) und dem Kontaktierungsbereich (3) durch die Einzelleiter (7, 8) überwunden ist.

7. Elektrische Heizvorrichtung (1) nach einem der vorhergehenden Ansprüche, **dadurch gekennzeichnet, dass** die Einzelleiter (7, 8) mit dem Kontaktierungsbereich (3) und/oder dem Kontaktelement (4) verlötet und/oder verklebt und/oder verklemmt und/oder verschraubt sind.

8. Elektrische Heizvorrichtung (1) nach einem der vorhergehenden Ansprüche, **dadurch gekennzeichnet, dass** Einzelleiter (7, 8) unterschiedlicher Materialdicke zur Erzeugung der elektrisch leitenden Verbindung verwendet sind.

9. Elektrische Heizvorrichtung (1) nach einem der vorhergehenden Ansprüche, **dadurch gekennzeichnet, dass** die einzelnen jeweils nebeneinander in einer gemeinsamen Schicht angeordneten Einzelleiter (7, 8) aus Einzelleitern (7, 8) der gleichen Materialdicke gebildet sind.

10. Elektrische Heizvorrichtung (1) nach einem der vorhergehenden Ansprüche, **dadurch gekennzeichnet, dass** die Einzelleiter (7, 8) durch Distanzelemente zueinander beabstandet sind.

## Claims

1. An electrical heating device (1) for a motor vehicle, which includes at least one heating element (9) and which includes at least one printed circuit board (2), wherein the printed circuit board (2) has at least one contacting area (3) for establishing an electrical connection between the heating element (9) and an energy source, wherein the heating element (9) has a plurality of PTC heating elements (6), which are electrically conductively connected to each other by a contact element (4), **characterised in that** the contact element (4) of the heating element (9) is disposed at a distance from the contacting area (3), wherein an electrically conductive connection is established between the contact element (4) and the contacting area (3) with the aid of a plurality of conductor strands (7, 8), wherein the electrically conductive connection is made between a respective contacting area (3) and a respective contact element (4) through the arrangement of a plurality of conductor strands (7) which are respectively connected to one of the contact elements (4) and one of the contacting areas (3).

2. The electrical heating device (1) according to claim 1, **characterised in that** the conductor strands (7) are formed by wires (7), which, spaced a distance apart, electrically conductively connect the contact element (4) to the contacting area (3).

3. The electrical heating device (1) according to claim 1, **characterised in that** the conductor strands (8) are formed by strap-like elements (8), which, spaced a distance apart, electrically conductively connect the contact element (4) to the contacting area (3).

4. The electrical heating device (1) according to one of the preceding claims, **characterised in that** the conductor strands (7, 8) are made of aluminium.

5. The electrical heating device (1) according to one of the preceding claims, **characterised in that** the conductor strands (7, 8) are disposed in multiple layers, wherein the conductor strands (7, 8) disposed next to each other as well as the conductor strands (7, 8) disposed on top of each other are disposed at a distance from each other.

6. The electrical heating device (1) according to one of the preceding claims, **characterised in that** the contact element (4) and the contacting area (3) are disposed at a distance from each other, wherein the distance between the contact element (4) and the contacting area (3) is overcome by the conductor strands (7, 8).

7. The electrical heating device (1) according to one of the preceding claims, **characterised in that** the conductor strands (7, 8) are soldered and/or glued and/or clamped and/or screwed to the contacting area (3) and/or to the contact element (4).

8. The electrical heating device (1) according to one of the preceding claims, **characterised in that** conductor strands (7, 8) having different material thicknesses are used to establish the electrically conductive connection.

9. The electrical heating device (1) according to one of the preceding claims, **characterised in that** the individual conductor strands (7, 8) disposed next to each other in a common layer are formed by conductor strands (7, 8) having the same material thickness.

10. The electrical heating device (1) according to one of the preceding claims, **characterised in that** the conductor strands (7, 8) are spaced a distance apart by spacing elements.

## Revendications

1. Dispositif de chauffage électrique (1) pour un véhicule automobile, comprenant au moins un élément chauffant (9) et au moins une platine à circuits imprimés (2), où la platine à circuits imprimés (2) présente au moins une zone de mise en contact (3) servant à la réalisation d'une connexion électrique entre l'élément chauffant (9) et une source d'énergie, où l'élément chauffant (9) présente une pluralité d'éléments chauffants CTP (6) qui sont reliés les uns aux autres de manière électroconductrice par un élément de contact (4), **caractérisé en ce que** l'élément de contact (4) de l'élément chauffant (9) est disposé en étant espacé par rapport à la zone de mise en contact (3), où une connexion électroconductrice entre l'élément de contact (4) et la zone de mise en contact (3) est produite par un pluralité de conducteurs individuels (7, 8), où la connexion électroconductrice se produit entre respectivement une zone de mise en contact (3) et respectivement un élément de contact (4), grâce à un agencement d'une pluralité de conducteurs individuels (7) qui sont connectés respectivement à l'un des éléments de contact (4) et respectivement à l'une des zones de mise en contact (3).

2. Dispositif de chauffage électrique (1) selon la revendication 1, **caractérisé en ce que** les conducteurs individuels (7) sont formés par des fils (7) qui, espacés les uns des autres, relient de manière électroconductrice l'élément de contact (4) à la zone de mise en contact (3).

3. Dispositif de chauffage électrique (1) selon la revendication 1, **caractérisé en ce que** les conducteurs individuels (8) sont formés par des éléments (8), en forme de bande, qui, espacés les uns des autres, relient de manière électroconductrice l'élément de contact (4) à la zone de mise en contact (3).

4. Dispositif de chauffage électrique (1) selon l'une quelconque des revendications précédentes, **caractérisé en ce que** les conducteurs individuels (7, 8) sont formés en se composant d'aluminium.

5. Dispositif de chauffage électrique (1) selon l'une quelconque des revendications précédentes, **caractérisé en ce que** les conducteurs individuels (7, 8) sont disposés en formant plusieurs couches, où aussi bien les conducteurs individuels (7, 8) disposés les uns à côté des autres, que les conducteurs individuels (7, 8) disposés les uns au-dessus des autres, sont disposés en étant espacés les uns des autres.

6. Dispositif de chauffage électrique (1) selon l'une quelconque des revendications précédentes, **caractérisé en ce que** l'élément de contact (4) et la zone de mise en contact (3) sont disposés en étant espacés l'un par rapport à l'autre, où la distance comprise entre l'élément de contact (4) et la zone de mise en contact (3) est franchie par les conducteurs individuels (7, 8).

7. Dispositif de chauffage électrique (1) selon l'une quelconque des revendications précédentes, **caractérisé en ce que** les conducteurs individuels (7, 8) sont brasés et / ou collés et / ou bloqués et / ou vissés avec la zone de mise en contact (3) et / ou avec l'élément de contact (4).

8. Dispositif de chauffage électrique (1) selon l'une quelconque des revendications précédentes, **caractérisé en ce que** des conducteurs individuels (7, 8) ayant une épaisseur de matériau variable sont utilisés pour la production de la connexion électroconductrice.

9. Dispositif de chauffage électrique (1) selon l'une quelconque des revendications précédentes, **caractérisé en ce que** les différents conducteurs individuels (7, 8), disposés à chaque fois les uns à côté des autres dans une couche commune, sont formés en se composant de conducteurs individuels (7, 8) ayant la même épaisseur de matériau.

10. Dispositif de chauffage électrique (1) selon l'une quelconque des revendications précédentes, **caractérisé en ce que** les conducteurs individuels (7, 8) sont espacés les uns des autres par des éléments d'écartement.
